# EUROPÄISCHE PATENTSCHRIFT

(11) **EP 3 685 121 B1**
(45) Veröffentlichungstag und Bekanntmachung des Hinweises auf die Patenterteilung: **27.01.2021**
(21) Anmeldenummer: 18796940.7
(22) Anmeldetag: 05.11.2018
(51) Int. Cl.: G01C 21/32

(54) **VERFAHREN ZUM AKTUALISIEREN EINER DIGITALEN NAVIGATIONSKARTE**
METHOD FOR UPDATING A DIGITAL NAVIGATION MAP
PROCÉDÉ D'ACTUALISATION D'UNE CARTE DE NAVIGATION NUMÉRIQUE

(30) Priorität: 12.12.2017 DE 102017222496
(43) Veröffentlichungstag der Anmeldung: 29.07.2020
(73) Patentinhaber: Audi AG, 85045 Ingolstadt (DE)
(72) Erfinder: HONG, Jihun, 92339 Beilngries (DE)
(86) Internationale Anmeldenummer: PCT/EP2018/080122
(87) Internationale Veröffentlichungsnummer: WO 2019/115091

(56) Entgegenhaltungen:
- EP-A2- 1 909 068
- US-A1- 2015 355 899

## Beschreibung

Die vorliegende Erfindung betrifft ein Verfahren zum Aktualisieren einer mehrere Kartensegmente umfassenden digitalen Navigationskarte, bei dem ein Backendsystem mehrere jeweils einem Kartensegment der digitalen Navigationskarte zugeordnete Aktualisierungspakete bereitstellt und ein bereitgestelltes Aktualisierungspaket in ein Endgerät eines Nutzers übertragen wird.

Digitale Navigationskarten dienen in vielen Fahrzeugen und mobilen Endgeräten, beispielsweise in Tablets oder Smartphones, dazu, während einer Bewegung des jeweiligen Fahrzeugs oder eines Nutzers des jeweiligen mobilen Endgeräts von einem Ausgangspunkt zu einem Zielpunkt entlang einer bestimmten oder gewählten Route zu navigieren. Insbesondere Fahrzeuge mit teilweiser oder vollständiger Selbstfahrfunktion (autonomes Fahren) sind auf hochpräzise digitale Navigationskarten angewiesen.

Für ein jederzeit sicheres Navigieren eines Fahrzeugs oder eines Nutzers eines mobilen Endgeräts ist es erforderlich, eine in einem Steuergerät des Fahrzeugs oder in dem mobilen Endgerät gespeicherte digitale Navigationskarte stets auf einem aktuellen Stand zu halten. Dies kann durch fortlaufend wiederholtes Aktualisieren der digitalen Navigationskarte erreicht werden. Dazu wird eine jüngere Version der digitalen Navigationskarte von einem Backendsystem gewöhnlich über eine drahtlose Verbindung in das Steuergerät des Fahrzeugs oder das mobile Endgerät übertragen.

Für eine bestmögliche Aktualität wird die digitale Navigationskarte automatisch, d. h. ohne initiatives Mitwirken des Nutzers, aktualisiert, sobald eine jüngere Version auf dem Backendsystem verfügbar ist. Bei einer Aktualisierung während einer Bewegung des Fahrzeugs oder des Nutzers des mobilen Endgeräts können allerdings die Navigationsfunktion oder weitere Funktionen des Fahrzeugs bzw. des mobilen Endgeräts beeinträchtigt sein. Dies ist beispielsweise für eine sicherheitskritische Funktion des Fahrzeugs nicht hinnehmbar.

Zum Vermeiden einer funktionalen Beeinträchtigung des Fahrzeugs während einer Fahrt kann die digitale Navigationskarte während einer Parkphase aktualisiert werden. Das Übertragen einer jüngeren Version der digitalen Navigationskarte in das Steuergerät des Fahrzeugs und das Aktualisieren der in dem Steuergerät des Fahrzeugs gespeicherten digitalen Navigationskarte verbrauchen aber eine elektrische Energie, welche einer Batterie des Fahrzeugs entnommen wird. Es besteht daher die Gefahr, dass die Batterie durch das Aktualisieren der digitalen Navigationskarte während einer Parkphase des Fahrzeugs so weit entladen wird, dass eine nach dem Aktualisieren in der Batterie verbleibende elektrische Energie für ein Starten des Fahrzeugs unzureichend ist.

Abgesehen davon kann es zu einem undefinierten Zwischenzustand der digitalen Navigationskarte in dem Steuergerät des Fahrzeugs kommen, wenn die Dauer der Parkphase für ein vollständiges Aktualisieren der digitalen Navigationskarte unzureichend ist. In dem undefinierten Zwischenzustand kann die gespeicherte digitale Navigationskarte unbrauchbar sein, was ein Wiederholen der Aktualisierung erforderlich macht.

So offenbart die DE 10 2015 014 049 A1 ein Verfahren zum Aktualisieren einer Software, welche in einem Steuergerät eines Fahrzeugs gespeichert ist. Bei dem Verfahren erfolgt das Aktualisieren der Software während einer Parkphase des Fahrzeugs, um während einer Fahrt des Fahrzeugs eine Beeinträchtigung des Steuergeräts aufgrund einer Aktualisierung auszuschließen. Zunächst wird ein Energiebedarf für die Aktualisierung prognostiziert und ein Energievorrat des Fahrzeugs ermittelt. Die Software wird unter der Bedingung aktualisiert, dass der Energievorrat abzüglich des prognostizierten Energiebedarfs eine bestimmte Mindestenergiemenge nicht unterschreitet. Weiterhin kann ein Zeitbedarf für die Aktualisierung prognostiziert werden und ein Parkverhalten eines Fahrers des Fahrzeugs erlernt werden. Die Software wird aktualisiert, wenn eine erlernte Parkdauer größer als der prognostizierte Zeitbedarf ist.

Ein weiteres Problem einer digitalen Navigationskarte besteht darin, dass es sehr aufwändig ist, sich fortlaufend ändernde Umgebungs- und Straßenbedingungen zu erfassen, entsprechend angepasste jüngere Versionen der digitalen Navigationskarte zu erzeugen und diese zeitnah zum Übertragen bereitzustellen. Demzufolge weist im Allgemeinen sogar eine bereitgestellte jüngste Version der digitalen Navigationskarte einen Unterschied zu den tatsächlichen Umgebungs- und Straßenbedingungen auf.

Zum Verringern dieses Unterschieds offenbart die DE 10 2012 212 740 A1 ein System und ein Verfahren zum Aktualisieren einer digitalen Navigationskarte. Das System umfasst einen Backendserver, welcher eine digitale Navigationskarte zum Übertragen bereitstellt, und mehrere Fahrzeuge, welche jeweils ein Steuergerät mit einer von dem Backendserver übertragenen und in dem Steuergerät gespeicherten digitalen Navigationskarte sowie mindestens einen Umgebungssensor und/oder Fahrzeugsensor umfassen. Bei dem Verfahren werden mit den Sensoren Umgebungs- und/oder Fahrzeugdaten erfasst und zu dem Backendserver übertragen. Der Backendserver ermittelt Unterschiede zwischen der bereitgestellten Navigationskarte und von den Fahrzeugen übertragenen Umgebungs- und/oder Fahrzeugdaten und aktualisiert entsprechend den ermittelten Unterschieden die bereitgestellte Navigationskarte, die dann in die Steuergeräte der Fahrzeuge übertragen wird.

Eine digitale Navigationskarte weist aufgrund einer großen Fläche des abgebildeten Gebiets und entsprechend vieler enthaltener Details üblicherweise ein großes Datenvolumen auf. Entsprechend erfordert eine vollständige Aktualisierung der digitalen Navigationskarte viel Zeit und verursacht zudem hohe Kosten, insbesondere bei Nutzung einer Mobilfunkverbindung. Infolgedessen gehen Bestrebungen dahin, den Aufwand für das Aktualisieren der digitalen Navigationskarte zu verringern.

So offenbart die EP 1 870 671 A1 ein System und ein Verfahren zum Aktualisieren einer digitalen Navigationskarte, welche mehrere gitterartig angeordnete quadratische Kartensegmente umfasst. Das System umfasst ein Fahrzeug mit einem Steuergerät und einer in dem Steuergerät gespeicherten digitalen Navigationskarte sowie einen Backendserver mit einer in dem Backendserver gespeicherten Navigationskarte. Unmittelbar nach einem Anlassen der Fahrzeugs fordert das Steuergerät von dem Backendserver eine Aktualisierungsinformation betreffend ein bestimmtes quadratisches Gebiet an, welches einen bestimmten Ort etwa in seiner Mitte aufweist, beispielsweise einen von einem Fahrer des Fahrzeugs eingegebenen Wohnort oder einen von dem Fahrer eingegebenen Zielort. Der Backendserver überträgt daraufhin eine Differenzinformation mit aktualisierten Kartensegmenten betreffend das bestimmte quadratische Gebiet in das Steuergerät. Ausgehend von der Differenzinformation fordert das Steuergerät mit abnehmender Priorität zunächst aktualisierte Kartensegmente eines zentralen quadratischen Teilgebiets und dann jeweils das zentrale Teilgebiet umgebender ringförmiger Teilgebiete um den Wohnort an und erhält die entsprechenden aktualisierten Kartensegmente von dem Backendserver übertragen.

EP 1 909 068 A2 offenbart ein weiteres Verfahren zum Aktualisieren einer digitalen Navigationskarte, welche mehrere gitterartig angeordnete rechteckige Kartensegmente umfasst.

Bei diesem Verfahren kann der Backendserver einer starken Last ausgesetzt sein, wenn von vielen Fahrzeugen gleichzeitig aktualisierte Kartensegmente angefordert werden. Zudem können von dem Backendserver tatsächlich nicht benötigte Kartensegmente übertragen werden, wenn der Fahrer des Fahrzeugs eine Änderung des Wohnorts oder des Zielorts nicht eingibt. Außerdem nutzt das Verfahren als Aktualisierungsweg ein Mobilfunknetz, welches in manchen Gebieten nicht mit genügender Qualität verfügbar ist.

Der Erfindung liegt daher die Aufgabe zugrunde, ein verbessertes Verfahren zum Aktualisieren einer mehrere Kartensegmente umfassenden digitalen Navigationskarte vorzuschlagen, welches flexibler ist und die beschriebenen Nachteile vermeidet.

Ein Gegenstand der vorliegenden Erfindung ist ein Verfahren zum Aktualisieren einer mehrere Kartensegmente umfassenden digitalen Navigationskarte gemäß Anspruch 1, bei dem ein Backendsystem mehrere jeweils einem Kartensegment der digitalen Navigationskarte zugeordnete Aktualisierungspakete bereitstellt und ein bereitgestelltes Aktualisierungspaket in ein Endgerät eines Nutzers übertragen wird. Das Backendsystem stellt für jedes Kartensegment der digitalen Navigationskarte ein versioniertes Aktualisierungspaket bereit, um es auf viele Endgeräte zu verteilen. Mit den bereitgestellten Aktualisierungspaketen kann eine in einem Endgerät installierte digitale Navigationskarte individuell und partiell, d. h. durch ein an ein Verhalten oder ein Interesse des Nutzers angepasstes Installieren einzelner Kartensegmente aktualisiert werden. Bei dem Backendsystem kann es sich um einen oder mehrere Backendserver, welche von einem Anbieter der digitalen Navigationskarte betrieben werden, oder auch um einen speziellen Bereich einer allgemein zugänglichen Internet-Cloud handeln. Fachleuten ist geläufig, dass die dafür erforderliche Kommunikation erst nach einer Authentisierung und Autorisierung des Nutzers von dem Backendsystem zugelassen wird. Bei dem Verfahren wird zum Übertragen von Aktualisierungspaketen vorteilhaft ein Übertragungsprotokoll genutzt, nach dem das Übertragen eines Aktualisierungspakets in ein Endgerät eines Nutzers jederzeit unterbrochen und nach einer Unterbrechung fortgesetzt wird. Auf diese Weise kann ein wiederholtes Teilübertragen eines Aktualisierungspakets verhindert werden.

Erfindungsgemäß fordert das Endgerät automatisch jedes von einer Paketreferenz eines Übertragungseintrags einer von dem Backendsystem erzeugten und übermittelten Übertragungsliste referenzierte bereitgestellte Aktualisierungspaket von dem Backendsystem entsprechend der Reihenfolge der Übertragungseinträge in der Übertragungsliste an. Auf diese Weise wird die Voraussetzung für eine hybride Aktualisierungslogik geschaffen, nach der das Backendsystem wesentlich beeinflusst, welche Kartensegmente in welcher Reihenfolge und zu welchem Zeitpunkt in das Endgerät übertragen werden. Das Backendsystem kann dadurch abweichend von üblichen Aktualisierungslogiken überwiegend als Master fungieren. Infolgedessen kann der Ablauf des Verfahrens allein durch einen Eingriff in das Backendsystem, d. h. ohne ein Konfigurieren des Endgeräts, jederzeit verändert werden. Vor allem bei einer üblicherweise sehr großen Anzahl von Nutzern und Endgeräten lässt sich auf diese Weise mittels eines Anpassens der Aktualisierungslogik ein insgesamt vorteilhafter, insbesondere für einen Betreiber des Backendsystems kostengünstiger Ablauf des Verfahrens einstellen.

Infolgedessen können neben Betriebsbedingungen eines beteiligten Endgeräts auch Betriebsbedingungen des Backendsystems, beispielsweise eine aktuelle Last des Backendsystems, bei dem Aktualisieren der digitalen Navigationskarte berücksichtigt werden.

Erfindungsgemäß erzeugt das Endgerät einen Aktualisierungsvermerk mit einem einem Kartensegment zugeordneten Segmentkennzeichner und einem bestimmten Vermerktyp und übermittelt den erzeugten Aktualisierungsvermerk an das Backendsystem. Der Aktualisierungsvermerk bildet einen konkreten auf ein Kartensegment bezogenen Aktualisierungsbedarf des Endgeräts ab. Der Vermerktyp kann als Unterscheidungsmerkmal der Aktualisierungsvermerke dienen und folglich ein differenziertes Verarbeiten von Aktualisierungsvermerken verschiedener Vermerktypen ermöglichen. Beispielsweise kann der Vermerktyp ein Kartensegment nach seiner Bedeutung für den Nutzer spezifizieren. Ebenso können anhand des Vermerktyps unterschiedliche Aktualisierungswege unterschieden werden, um ein Aktualisierungsverhalten des Nutzers differenziert abzubilden.

Vorteilhaft ist hierbei weiterhin, dass ausschließlich das Endgerät Positionsdaten nutzt, um anzufordernde Kartensegmente zu bestimmen. An das Backendsystem werden keine Positionsdaten, sondern lediglich ein größeres Gebiet identifizierende Segmentkennzeichner übermittelt. Dadurch können datenschutzrechtliche Probleme vermieden werden. Aufgrund der Zuordnung der Vermerkliste zu einem Nutzer kann derselbe Nutzer mehrere unterschiedliche Endgeräte nutzen, um Aktualisierungsvermerke zu erzeugen und an das Backendsystem zu übertragen.

Das Backendsystem trägt erfindungsgemäß den übermittelten Aktualisierungsvermerk in eine dem Nutzer zugeordnete Vermerkliste ein. Das Backendsystem kann auch einen in die Vermerkliste eingetragenen Aktualisierungsvermerk, insbesondere durch Ändern des Vermerktyps verändern, und/oder selbst einen Aktualisierungsvermerk erzeugen. Die Aktualisierungsvermerke des Nutzers werden also unabhängig von dem jeweils genutzten Endgerät in derselben Vermerkliste gesammelt. Zum einen können auf diese Weise redundante Übertragungen von Kartensegmenten vermieden werden. Zum anderen können sämtliche Aktualisierungsvermerke des Nutzers für eine intelligente Aktualisierungsstrategie ausgewertet werden. Abgesehen davon, spiegeln die Aktualisierungsvermerke in der Vermerkliste des Nutzers ein Interesse, d. h. ein Bewegungsverhalten und ein Aktualisierungsverhalten des Nutzers wieder und ermöglichen dem Backendsystem, den Aktualisierungsbedarf des Nutzers zu erlernen und die Aktualisierungsstrategie auf den Nutzer abzustimmen.

Weiterhin erzeugt das Backendsystem zu jedem von der Vermerkliste umfassten Aktualisierungsvermerk einen Prioritäteneintrag mit dem Segmentkennzeichner des Aktualisierungsvermerks und sortiert den erzeugten Prioritäteneintrag entsprechend einer ihm mittels einer Prioritätentabelle zugeordneten und von dem Vermerktyp des Aktualisierungsvermerks abhängigen Priorität in eine dem Nutzer zugeordnete Prioritätenliste ein. Die Prioritätentabelle ordnet jedem Vermerktyp eines Aktualisierungsvermerks einen Prioritätswert zu, welcher die Dringlichkeit der Aktualisierung angibt. Innerhalb eines Prioritätswerts kann abhängig von weiteren den Aktualisierungsvermerk betreffenden Priorisierungskriterien eine feinere Differenzierung möglich sein.

Erfindungsgemäß installiert das Endgerät ein übertragenes Aktualisierungspaket und übermittelt eine Versionsnummer des installierten Aktualisierungspakets an das Backendsystem. Das Backendsystem erzeugt einen Versionseintrag mit der übermittelten Versionsnummer und dem Segmentkennzeichner des installierten Aktualisierungspakets und trägt den erzeugten Versionseintrag in eine dem Endgerät zugeordnete Versionsliste ein. Damit kennt das Backendsystem in jedem Zeitpunkt die Aktualisierungsstände der Kartensegmente der digitalen Navigationskarte in jedem Endgerät des Benutzers.

Erfindungsgemäß erzeugt das Backendsystem zu jedem Prioritäteneintrag der Prioritätenliste anhand der dem Endgerät zugeordneten Versionsliste eine Paketreferenz mit dem Segmentkennzeichner des Prioritäteneintrags, der Versionsnummer des den Segmentkennzeichner umfassenden Versionseintrags und einer Versionsnummer des bereitgestellten Aktualisierungspakets, einen die erzeugte Paketreferenz umfassenden Übertragungseintrag und sortiert den erzeugten Übertragungseintrag entsprechend der Position des Prioritäteneintrags in der Prioritätenliste in die dem Endgerät und dem Nutzer zugeordnete Übertragungsliste ein. Dieser Verfahrensschritt kann auch ein erlerntes Aktualisierungsverhalten berücksichtigen, beispielsweise zu welchen Zeitpunkten und mit welchen Endgeräten der Nutzer Aktualisierungsvermerke erzeugt und übermittelt. So kann für ein bestimmtes Aktualisierungspaket eine Paketreferenz erst nach einer Aktualisierungsfrist in die einem zweiten Endgerät des Nutzers zugeordnete Übertragungsliste einsortiert werden, falls das bestimmte Aktualisierungspaket bis zum Ablauf der Aktualisierungsfrist nicht in ein erstes Endgerät des Nutzers übertragen wurde. Der Fachmann kann weitere Aspekte eines Aktualisierungsverhaltens eines Nutzers erkennen und bei dem Erzeugen der Übertragungsliste berücksichtigen.

In einer Ausführungsform erzeugt das Endgerät einen Aktualisierungsvermerk mit dem Vermerktyp "Wohnort", wenn das dem Kennzeichner zugeordnete Kartensegment mit einem Wohnortgebiet überlappt, welches durch einen Mittelpunkt und insbesondere kreisförmig durch einen bestimmten Wohnortradius definiert ist, und für den Mittelpunkt eine erste Wohnortbedingung erfüllt ist, dass das Endgerät für einen bestimmten ersten Zeitraum täglich jeweils zwischen einer Nachtstunde und einer frühen Morgenstunde in dem Mittelpunkt angeordnet ist. Infolge des tageszeitlichen Kriteriums für das Bestimmen des Wohnorts kann eine Eingabe des Wohnorts durch den Nutzer entfallen. Als erster Zeitraum können beispielsweise 14 Tage bestimmt werden. Wenn ein Nutzer die wesentlichen Nachtstunden 14 Tage lang ausnahmslos an demselben Ort verbringt, ist dieser Ort mit hoher Wahrscheinlichkeit sein Wohnort.

Durch das kreisförmige Wohnortgebiet wird sichergestellt, dass mit dem Vermerktyp "Wohnort" versehene Aktualisierungsvermerke allen Kartensegmenten zugeordnet werden, die zu einem Gebiet um den Wohnort mit dem bestimmten Wohnortradius korrespondieren. Dadurch wird die digitale Navigationskarte mindestens innerhalb eines durch den Wohnortradius definierten Abstands um den Wohnort des Nutzers aktualisiert. Dies wird Wohnorten gerecht, welche am Rand eines Kartensegments angeordnet sind. Als Wohnortradius können beispielsweise 50 km bestimmt werden. Für den täglichen Bedarf entfernt sich der Nutzer gewöhnlich nicht weiter als 50 km von dem Wohnort.

Ein den Vermerktyp "Wohnort" umfassender Aktualisierungsvermerk wird gelöscht, wenn für den Mittelpunkt eine zweite Wohnortbedingung erfüllt ist, dass das Endgerät für einen bestimmten zweiten Zeitraum täglich jeweils zwischen der Nachtstunde und der frühen Morgenstunde nicht in dem Mittelpunkt angeordnet ist. Der zweite Zeitraum gewährleistet also, dass veraltete Aktualisierungsvermerke aus der Vermerkliste gelöscht werden. Er sollte so lang bestimmt sein, dass eine beispielsweise urlaubsbedingte längere Abwesenheit vom Wohnort nicht zum Löschen eines Aktualisierungsvermerks vom Vermerktyp "Wohnort" führt, beispielsweise vier Wochen. Das Löschen veralteter Aktualisierungsvermerke verhindert überflüssige Aktualisierungen und verringert das zum Aktualisieren insgesamt übertragene Datenvolumen.

In einer weiteren Ausführungsform erzeugt das Endgerät einen Aktualisierungsvermerk mit dem Vermerktyp "Arbeitsort", wenn das dem Kennzeichner zugeordnete Kartensegment mit einem Arbeitsortgebiet überlappt, welches durch einen Mittelpunkt und insbesondere kreisförmig durch einen bestimmten Arbeitsortradius definiert ist, und für den Mittelpunkt eine erste Arbeitsortbedingung erfüllt ist, dass das Endgerät für einen bestimmten ersten Zeitraum täglich jeweils zwischen einer Vormittagsstunde und einer Nachmittagsstunde oder zwischen einer Mittagsstunde und einer Abendstunde in dem Mittelpunkt angeordnet ist. Infolge des tageszeitlichen Kriteriums für das Bestimmen des Arbeitsorts kann eine Eingabe des Arbeitsorts durch den Nutzer entfallen. Als erster Zeitraum können beispielsweise 14 Tage bestimmt sein. Wenn ein Nutzer die erste Tageshälfte oder die zweite Tageshälfte 14 Tage lang ausnahmslos an demselben Ort verbringt, ist dieser Ort mit hoher Wahrscheinlichkeit sein Arbeitsort.

Durch das kreisförmige Arbeitsortsgebiet wird sichergestellt, dass mit dem Vermerktyp "Arbeitsort" versehene Aktualisierungsvermerke allen Kartensegmenten zugeordnet sind, die zu einem Gebiet um den Arbeitsort mit dem bestimmten Arbeitsortradius korrespondieren. Dadurch wird die digitale Navigationskarte mindestens innerhalb eines durch den Arbeitsortradius definierten Abstands um den Arbeitsort des Nutzers aktualisiert. Dies wird Arbeitsorten gerecht, welche am Rand eines Kartensegments angeordnet sind. Als Arbeitsortradius können beispielsweise 50 km bestimmt werden. Gewöhnlich entfernt sich der Nutzer während der Arbeit nicht weiter als 50 km von dem Arbeitsort.

Ein den Vermerktyp "Arbeitsort" umfassender Aktualisierungsvermerk wird gelöscht, wenn für den Mittelpunkt eine zweite Arbeitsortbedingung erfüllt ist, dass das Endgerät für einen bestimmten zweiten Zeitraum täglich jeweils zwischen der Vormittagsstunde und der Nachmittagsstunde oder zwischen der Mittagsstunde und der Abendstunde nicht in dem Mittelpunkt angeordnet ist. Der zweite Zeitraum gewährleistet also, dass veraltete Aktualisierungsvermerke aus der Vermerkliste gelöscht werden. Er sollte so lang bestimmt sein, dass eine beispielsweise urlaubsbedingte längere Abwesenheit vom Arbeitsort nicht zum Löschen eines Aktualisierungsvermerks vom Vermerktyp "Arbeitsort" führt, beispielsweise vier Wochen. Das Löschen veralteter Aktualisierungsvermerke verhindert überflüssige Aktualisierungen und verringert das zum Aktualisieren insgesamt übertragene Datenvolumen.

In einer Ausführungsform erzeugt das Endgerät einen Aktualisierungsvermerk mit dem Vermerktyp "Zielort", wenn das dem Kennzeichner zugeordnete Kartensegment mit einem Zielortgebiet überlappt, welches durch einen Mittelpunkt und insbesondere kreisförmig durch einen bestimmten Zielortradius definiert ist, und für den Mittelpunkt eine erste Zielortbedingung erfüllt ist, dass der Mittelpunkt von dem Nutzer als Zielort einer Fahrstrecke in das Endgerät eingegeben hat und einen bestimmten Mindestanteil der Fahrstrecke zurückgelegt hat. Aktualisierungsvermerke dieses Vermerktyps betreffen üblicherweise Gebiete, welche von dem Nutzer selten und/oder nicht regelmäßig aufgesucht werden. Sie stellen sicher, dass die digitale Navigationskarte in Gebieten um den Zielort aktualisiert wird. Um nicht bereits durch eine ggf. irrtümliche Eingabe eines Zielorts einen Aktualisierungsvermerk dieses Vermerktyps zu erzeugen, muss der Nutzer eine nicht unwesentliche Mindeststrecke auf der Fahrtroute zu dem Zielort zurückgelegt haben.

Durch das kreisförmige Zielortgebiet oder das kreisförmige Zwischenstoppgebiet wird sichergestellt, dass mit dem Vermerktyp "Zielort" versehene Aktualisierungsvermerke allen Kartensegmenten zugeordnet sind, die zu einem Gebiet um den Zielort mit dem bestimmten Zielortradius korrespondieren. Dadurch wird die digitale Navigationskarte mindestens innerhalb eines durch den Zielortradius definierten Abstands um den Zielort oder den Zwischenstopp aktualisiert. Als Zielortradius können beispielsweise 5 km bestimmt werden. Gewöhnlich entfernt sich der Nutzer während einer Fahrt nicht weiter als 5 km von dem Zielort.

Ein den Vermerktyp "Zielort" umfassender Aktualisierungsvermerk wird gelöscht, wenn für den Mittelpunkt eine zweite Zielortbedingung erfüllt ist, dass der Mittelpunkt von dem Nutzer als Zielort der Fahrstrecke in dem Endgerät gelöscht worden ist und das Endgerät nicht in dem zugeordneten Kartensegment angeordnet ist. Demnach werden auch nicht mehr benötigte Aktualisierungsvermerke des Vermerktyps "Zielort" oder "Zwischenstopp" aus der Vermerkliste des Nutzers gelöscht, wodurch unnötige Aktualisierungen vermieden werden.

Der Fachmann kann einen weiteren Vermerktyp "Zwischenstopp" ohne Weiteres in Analogie zu dem Vermerktyp "Zielort" vorsehen. Selbstverständlich sind die genannten Vermerktypen lediglich beispielhaft und nicht einschränkend zu verstehen. Andere Vermerktypen können "Aktueller Aufenthaltsort", "Fahrstrecke", "Fahrzeugumgebung", "Umgebung des mobilen Endgeräts", "Ehemaliger Zielort", "Ehemalige Fahrstrecke", "Prognose" usw. mit jeweils geeigneten ersten und zweiten Bedingungen sein.

In einer bevorzugten Ausführungsform wird der Aktualisierungsvermerk von einem Steuergerät eines Fahrzeugs des Nutzers oder einem mobilen Endgerät des Nutzers, insbesondere einem Smartphone oder einem Tablet, oder einem stationären Endgerät des Nutzers, insbesondere einem Notebook, erzeugt und an das Backendsystem übermittelt. Sowohl ein Steuergerät eines Fahrzeugs als auch mobile Endgeräte umfassen üblicherweise eine Einrichtung zur Positionsermittlung, beispielsweise einen Satellitenempfänger zum Empfangen von GPS-Daten (Global Positioning System), sowie einen Zeitmesser. Mittels dieser Einrichtungen kann zu einem Kartensegment anhand einer Position des Endgeräts und einer Uhrzeit ein entsprechender Aktualisierungsvermerk mit einem passenden Vermerktyp erzeugt werden.

In weiteren Ausführungsformen wird ein bereitgestelltes Aktualisierungspaket über ein Mobilfunknetz in das Steuergerät des Fahrzeugs und/oder über das Mobilfunknetz in das Smartphone und aus dem Smartphone drahtlos in das Steuergerät des Fahrzeugs und/oder über das Mobilfunknetz in das Tablet und aus dem Tablet drahtlos in das Steuergerät des Fahrzeugs übertragen und/oder wird ein bereitgestelltes Aktualisierungspaket über ein stationäres Internet in ein lokales Drahtlosnetzwerk des Nutzers und aus dem lokalen Drahtlosnetzwerk in das Steuergerät des Fahrzeugs und/oder über das stationäre Internet in das Notebook und von dem Notebook mittels eines mobilen Datenspeichers des Nutzers, insbesondere mittels eines USB-Sticks, in das Steuergerät des Fahrzeugs übertragen. Zum Übertragen eines bereitgestellten Aktualisierungspakets nutzt das Verfahren mehrere unterschiedliche Aktualisierungswege, die sich durch die jeweiligen Kommunikationskosten unterscheiden. Auf diese Weise kann für jedes Aktualisierungspaket eine hinsichtlich Zeitpunkt und Kosten günstige Übertragung bestimmt werden. Beispielsweise können Aktualisierungspakete während der Aktualisierungsfrist von einem teuren Übertragen über das Mobilfunknetz ausgeschlossen sein, wenn sie von dem Nutzer gewöhnlich auf anderen Aktualisierungswegen übertragen werden und ein Aktualisieren nicht dringend erforderlich ist. Das Steuergerät des Fahrzeugs kann zum Übertragen von Aktualisierungspaketen während eines Parkens des Fahrzeugs eine maximale Übertragungsdauer definieren. Wenn die maximale Übertragungsdauer erreicht ist, wird die Übertragung abgebrochen und zu einem späteren Zeitpunkt fortgesetzt. Auf diese Weise wird ein Entladen einer Batterie des Fahrzeugs während des Parkens vermieden. Ferner kann das Steuergerät derart konfiguriert sein, dass Funktionen des Steuergeräts, die von dem Übertragen eines Aktualisierungspakets verschieden sind, nicht beeinträchtigt sind, wenn das Aktualisierungspaket während einer Fahrt des Fahrzeugs übertragen wird.

In einer Ausführungsform wird das Aktualisierungspaket als ein vollständiges Aktualisierungspaket und als ein inkrementelles Aktualisierungspaket bereitgestellt und der Übertragungseintrag mit einer das vollständige Aktualisierungspaket referenzierenden Paketreferenz erzeugt, wenn eine positive Versionsdifferenz zwischen einer Versionsnummer des bereitgestellten Aktualisierungspakets und einer Versionsnummer eines zu dem bereitgestellten Aktualisierungspaket korrespondierenden in dem Endgerät installierten Aktualisierungspakets größer als ein bestimmter Differenzwert ist, oder wird mit einer das inkrementelle Aktualisierungspaket referenzierenden Paketreferenz erzeugt, wenn die Versionsdifferenz höchstens gleich dem bestimmten Differenzwert ist. Mit anderen Worten kann es bei geringen Versionsdifferenzen günstiger sein, ein Kartensegment inkrementell zu aktualisieren. Ein inkrementelles Aktualisierungspaket weist ein geringes Datenvolumen auf und erfordert entsprechend wenig Zeit zum Übertragen. Ab einer bestimmten Versionsdifferenz ist dieser Vorteil allerdings vernachlässigbar, so dass stattdessen ein vollständiges Aktualisierungspaket übertragen werden kann. Entsprechend kann das Backendsystem für jedes Kartensegment ein vollständiges Aktualisierungspaket und mehrere inkrementelle Aktualisierungspakete bereitstellen.

Die Erfindung ist anhand einer Ausführungsform in den Zeichnungen schematisch dargestellt und wird unter Bezugnahme auf die Zeichnungen weiter beschrieben. Es zeigt:
- Figur 1: in einer schematischen Darstellung einen Ausschnitt einer digitalen Navigationskarte;
- Figur 2: in einer schematischen Darstellung einen ersten Abschnitt einer Ausführungsform des erfindungsgemäßen Verfahrens;
- Figur 3: in einem Ablaufdiagramm einen weiteren Abschnitt einer Ausführungsform des erfindungsgemäßen Verfahrens;
- Figur 4: in einer vergrößerten Darstellung ein Detail des in Figur 3 gezeigten Abschnitts;
- Figur 5: in einer vergrößerten Darstellung ein Detail des in Figur 4 gezeigten Details;
- Figur 6: in einer vergrößerten Darstellung ein weiteres Detail des in Figur 3 gezeigten Abschnitts;
- Figur 7: in einer schematischen Darstellung einen weiteren Abschnitt einer Ausführungsform des erfindungsgemäßen Verfahrens;
- Figur 8: in einer vergrößerten Darstellung ein Detail der in Figur 1 gezeigten digitalen Navigationskarte mit einem Wohnort;
- Figur 9: in einem Ablaufdiagramm einen auf das in Figur 8 gezeigte Detail bezogenen Abschnitt einer Ausführungsform des erfindungsgemäßen Verfahrens;
- Figur 10: in einer vergrößerten Darstellung das in Figur 8 gezeigte Detail mit drei Zielorten;
- Figur 11: in einem Ablaufdiagramm einen auf das in Figur 10 gezeigte Detail bezogenen Abschnitt einer Ausführungsform des erfindungsgemäßen Verfahrens.

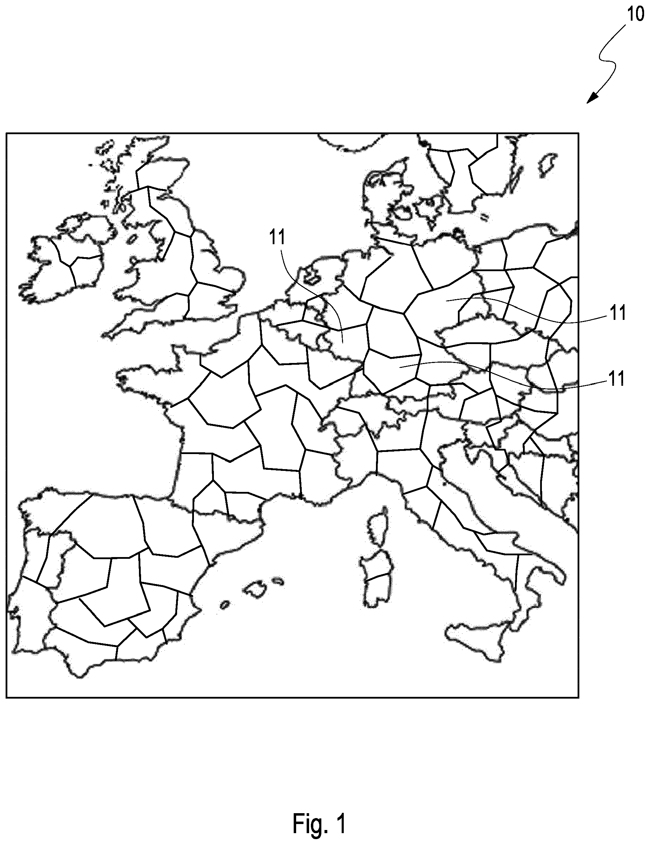

Figur 1 zeigt in einer schematischen Darstellung einen Ausschnitt einer digitalen Navigationskarte 10. Die digitale Navigationskarte 10 umfasst mehrere Kartensegmente 11 und korrespondiert zu dem europäischen Raum, kann aber auch jeden anderen Abschnitt der Erdoberfläche abbilden. Bei dem erfindungsgemäßen Verfahren zum Aktualisieren der digitalen Navigationskarte 10 stellt ein Backendsystem mehrere jeweils einem Kartensegment 11 der digitalen Navigationskarte 10 zugeordnete Aktualisierungspakete bereit, welche bei Bedarf in ein Endgerät eines Nutzers übertragen werden. Die Aktualisierungspakete werden von dem Backendsystem als vollständige Aktualisierungspakete und als inkrementelle Aktualisierungspakete bereitgestellt.

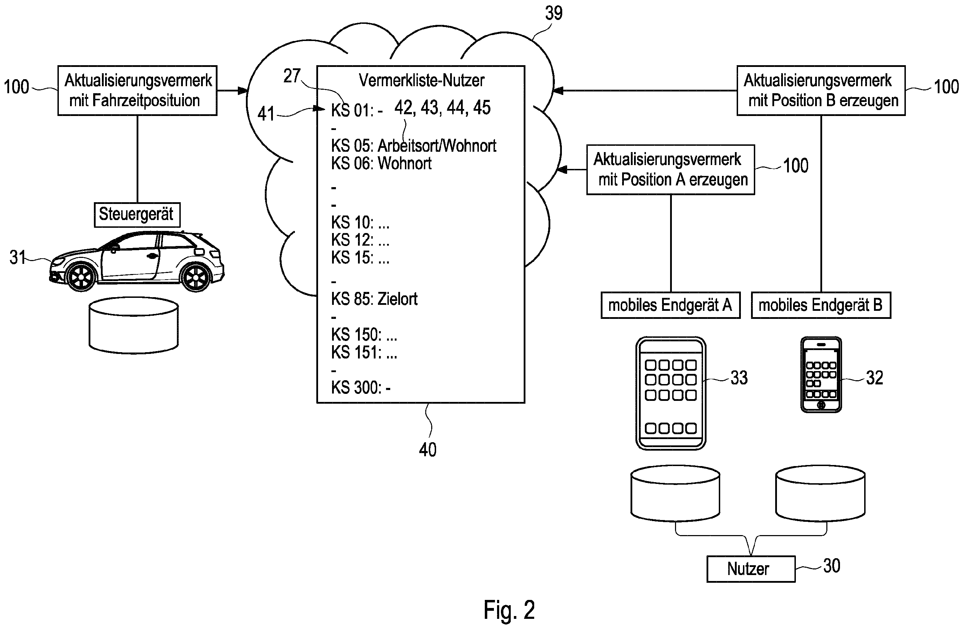

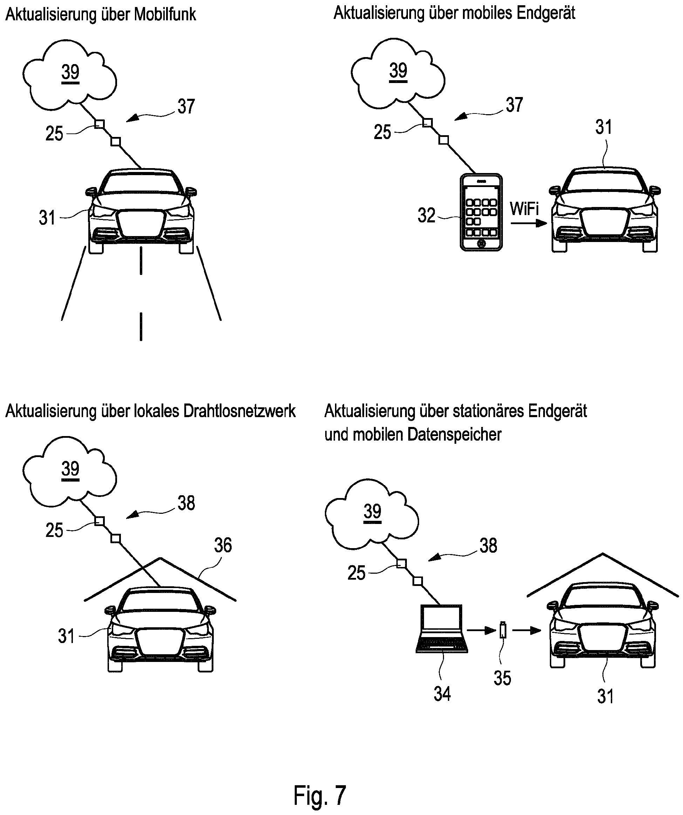

Figur 2 zeigt in einer schematischen Darstellung einen ersten Abschnitt einer Ausführungsform des erfindungsgemäßen Verfahrens. Von einem Steuergerät eines Fahrzeugs 31 des Nutzers 30 oder einem mobilen Endgerät des Nutzers 30, hier einem Smartphone 32 oder einem Tablet 33, oder einem stationären Endgerät des Nutzers 30, hier einem Notebook 34 (siehe Figur 7), wird ein Aktualisierungsvermerk 41 erzeugt 100 und an das Backendsystem 39 übermittelt. Der Aktualisierungsvermerk 41 umfasst einen einem Kartensegment zugeordneten Segmentkennzeichner 27 und einen bestimmten Vermerktyp 42, 43, 44, 45. Das Backendsystem 39 ist als Internet-Cloud ausgebildet und trägt den übermittelten Aktualisierungsvermerk 41 in eine dem Nutzer 30 zugeordnete Vermerkliste 40 ein. Zudem verändert das Backendsystem 39 in die Vermerkliste 40 eingetragene Aktualisierungsvermerke 41 insbesondere durch Ändern des Vermerktyps 42, 43, 44, 45 abhängig von einem Interesse, d. h. einem Bewegungsverhalten des Nutzers 30 und/oder erzeugt selbst Aktualisierungsvermerke 41 und trägt sie in die Vermerkliste 40 ein.

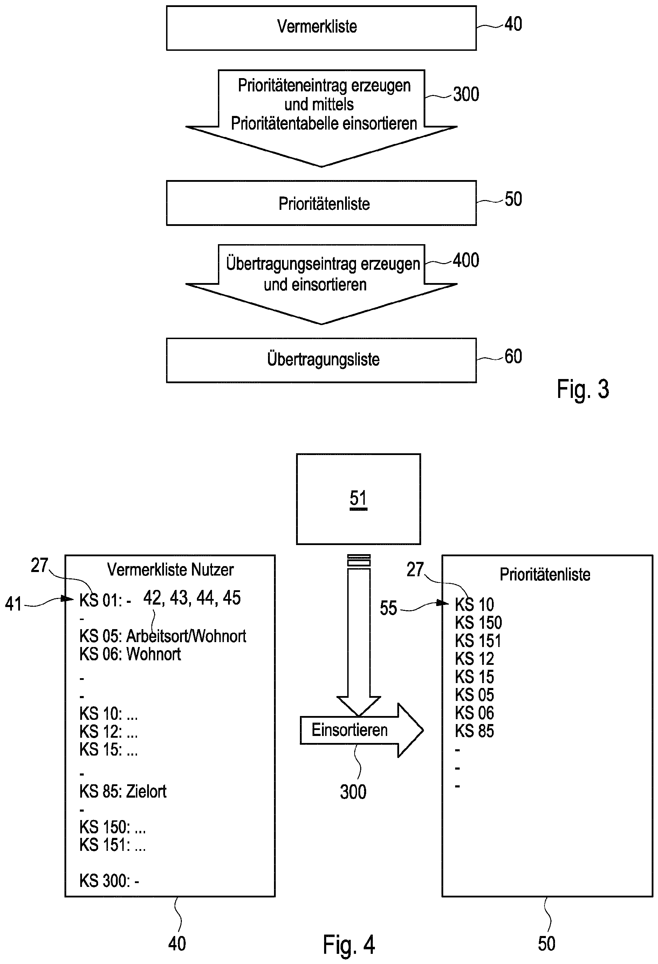

Figur 3 zeigt in einem Ablaufdiagramm einen weiteren Abschnitt einer Ausführungsform des erfindungsgemäßen Verfahrens: Das Backendsystem 39 erzeugt 300 aus der Vermerkliste 40 eine Prioritätenliste 50 und erzeugt 400 aus der Prioritätenliste 50 eine Übertragungsliste 60.

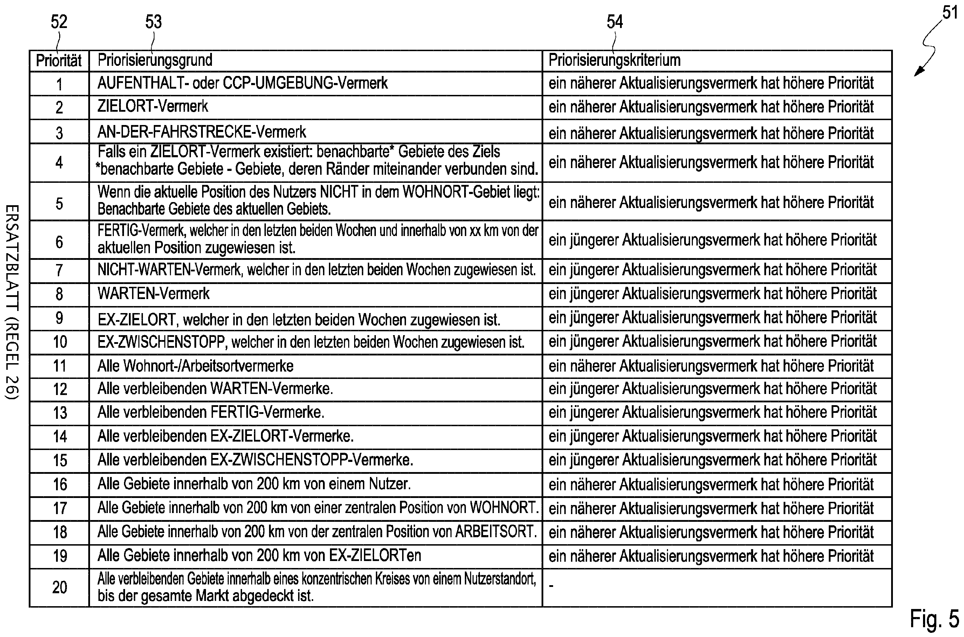

Figur 4 zeigt in einer vergrößerten Darstellung ein Detail des in Figur 3 gezeigten Abschnitts. Zu jedem von der Vermerkliste 40 umfassten Aktualisierungsvermerk 41 wird ein Prioritäteneintrag 55 mit dem Segmentkennzeichner 27 des Aktualisierungsvermerks 41 erzeugt. Der erzeugte Prioritäteneintrag 55 wird entsprechend einer ihm mittels einer Prioritätentabelle 51 zugeordneten und von dem Vermerktyp 42, 43, 44, 45 des Aktualisierungsvermerks 41 abhängigen Priorität 52 (siehe Figur 5) in eine dem Nutzer 30 zugeordnete Prioritätenliste 50 einsortiert 300.

Figur 5 zeigt in einer vergrößerten Darstellung ein Detail des in Figur 4 gezeigten Details. Jeder Eintrag der Prioritätentabelle 51 umfasst eine Priorität 52, einen Priorisierungsgrund 53, welcher Vermerktypen 42, 43, 44, 45 umfasst, sowie weitere Priorisierungskriterien 54 zum Differenzieren innerhalb einer Priorität 52.

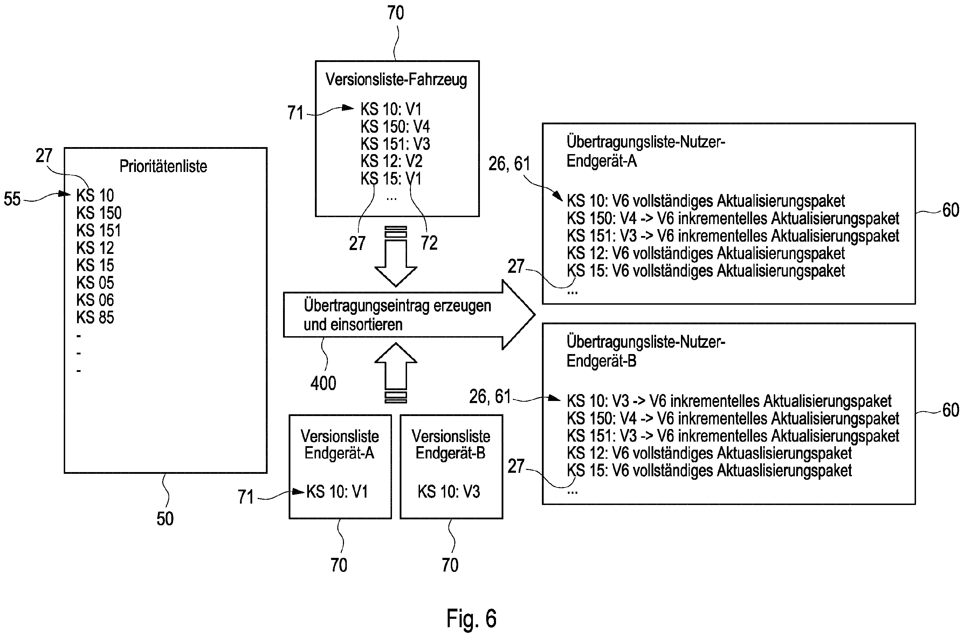

Figur 6 zeigt in einer vergrößerten Darstellung ein weiteres Detail des in Figur 3 gezeigten Abschnitts. Das Backendsystem 39 erzeugt zu jedem Prioritäteneintrag 55 der Prioritätenliste 50 anhand der dem Endgerät zugeordneten Versionsliste 70 eine Paketreferenz 26 mit dem Segmentkennzeichner 27 des Prioritäteneintrags 55, der Versionsnummer 72 des den Segmentkennzeichner 27 umfassenden Versionseintrags 71 und einer Versionsnummer des bereitgestellten Aktualisierungspakets sowie einen die erzeugte Paketreferenz 26 umfassenden Übertragungseintrag 61 und sortiert den erzeugten Übertragungseintrag 61 entsprechend der Position des Prioritäteneintrags 55 in der Prioritätenliste 50 in die dem Endgerät und dem Nutzer 30 zugeordnete Übertragungsliste 60 ein 400.

Der Übertragungseintrag 61 wird mit einer ein vollständiges Aktualisierungspaket referenzierenden Paketreferenz 26 erzeugt, wenn eine positive Versionsdifferenz zwischen einer Versionsnummer des bereitgestellten Aktualisierungspakets und einer Versionsnummer 72 eines zu dem bereitgestellten Aktualisierungspaket korrespondierenden in dem Endgerät installierten Aktualisierungspakets größer als ein bestimmter Differenzwert ist, oder mit einer ein inkrementelles Aktualisierungspaket referenzierenden Paketreferenz 26 erzeugt, wenn die Versionsdifferenz höchstens gleich dem bestimmten Differenzwert ist.

Nach dem Empfangen der Übertragungsliste 60 fordert das Endgerät automatisch jedes von einer Paketreferenz 26 eines Übertragungseintrags 61 der von dem Backendsystem 39 erzeugten und übermittelten Übertragungsliste 60 referenzierte Aktualisierungspaket von dem Backendsystem 39 entsprechend der Reihenfolge der Übertragungseinträge 61 in der Übertragungsliste 60 an.

Figur 7 zeigt in einer schematischen Darstellung einen weiteren Abschnitt einer Ausführungsform des erfindungsgemäßen Verfahrens. Ein bereitgestelltes Aktualisierungspaket 25 wird von dem Backendsystem 39 über ein Mobilfunknetz 37 in das Steuergerät des Fahrzeugs 31 übertragen (Over The Air Update, OTA Update). Alternativ oder zusätzlich wird das Aktualisierungspaket 25 über das Mobilfunknetz 37 in das Smartphone 32 und aus dem Smartphone 32 drahtlos in das Steuergerät des Fahrzeugs 31 bzw. - nicht dargestellt - über das Mobilfunknetz 37 in das Tablet und aus dem Tablet drahtlos in das Steuergerät des Fahrzeugs 31 übertragen (Over The App Update).

Alternativ oder zusätzlich wird das Aktualisierungspaket 25 über ein stationäres Internet 38 in ein lokales Drahtlosnetzwerk 36 des Nutzers 30 und aus dem lokalen Drahtlosnetzwerk 36 in das Steuergerät des Fahrzeugs 31 übertragen (Over The WiFi Update). Alternativ oder zusätzlich wird das Aktualisierungspaket 25 über das stationäre Internet 38 in das Notebook 34 und von dem Notebook 34 mittels eines mobilen Datenspeichers des Nutzers 30, hier mittels eines USB-Sticks 35, in das Steuergerät des Fahrzeugs 31 übertragen (Customer Update).

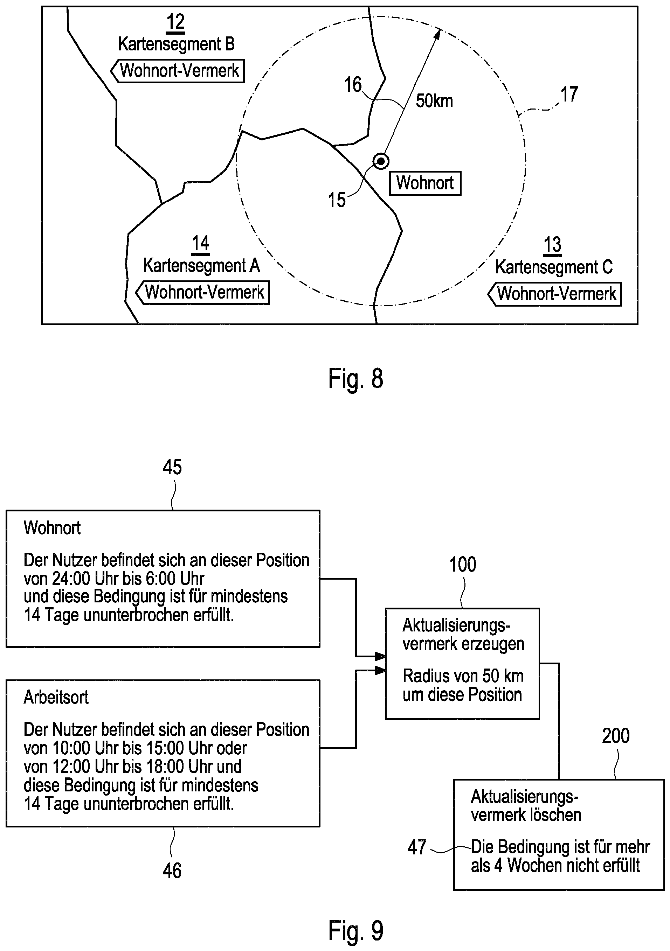

Figur 8 zeigt in einer vergrößerten Darstellung ein Detail der in Figur 1 gezeigten digitalen Navigationskarte 10 mit einem Wohnort. Das Detail zeigt drei Kartensegmente 12, 13, 14, einen zu den Wohnort abbildenden Mittelpunkt 15, welcher in dem Kartensegment 13 angeordnet ist und ein durch einen Wohnortradius 16 von 50 km definiertes kreisförmiges Wohnortgebiet 17 um den Mittelpunkt 15. Das kreisförmige Wohnortgebiet 17 überlappt mit den drei Kartensegmenten 12, 13, 14.

Figur 9 zeigt in einem Ablaufdiagramm einen auf das in Figur 9 gezeigte Detail bezogenen Abschnitt einer Ausführungsform des erfindungsgemäßen Verfahrens. Wenn eine erste Wohnortbedingung 45, dass für einen bestimmten ersten Zeitraum von mindestens 14 Tagen das Endgerät täglich jeweils zwischen 0:00 Uhr in der Nacht und 6:00 Uhr am frühen Morgen in dem Mittelpunkt 15 angeordnet ist, erfüllt ist, werden drei Aktualisierungsvermerke 41 jeweils mit einem der drei den Kartensegmenten 12, 13, 14 zugeordneten Segmentbezeichner 12, 13, 14 und dem Vermerktyp "Wohnort" 42 erzeugt 100.

Wenn eine zweite Wohnortbedingung 47, dass das Endgerät für einen bestimmten zweiten Zeitraum von mindestens vier Wochen täglich jeweils zwischen 0:00 Uhr und 6:00 Uhr nicht in dem Mittelpunkt 15 angeordnet ist, erfüllt ist, wird jeder Aktualisierungsvermerk 41 mit dem Vermerktyp "Wohnort" 42 gelöscht 200.

Entsprechend wird verfahren, wenn der in Figur 8 dargestellte Mittelpunkt 15 zu einem Arbeitsort korrespondiert.

Wenn eine erste Arbeitsortbedingung 46, dass für einen bestimmten ersten Zeitraum von mindestens 14 Tagen das Endgerät täglich jeweils zwischen 10:00 Uhr am Vormittag und 15 Uhr am Nachmittag oder zwischen 12:00 Uhr am Mittag und 18:00 Uhr am Abend in dem Mittelpunkt 15 angeordnet ist, erfüllt ist, werden drei Aktualisierungsvermerke 41 jeweils mit einem der drei den Kartensegmenten 12, 13, 14 zugeordneten Segmentbezeichner 12, 13, 14 und dem Vermerktyp "Arbeitsort" 43 erzeugt 100.

Wenn eine zweite Arbeitsortbedingung 47, dass das Endgerät für einen bestimmten zweiten Zeitraum täglich jeweils zwischen 10:00 Uhr und 15:00 Uhr oder zwischen 12:00 Uhr und 18:00 Uhr nicht in dem Mittelpunkt 15 angeordnet ist, erfüllt ist, wird jeder Aktualisierungsvermerk 41 mit dem Vermerktyp "Arbeitsort" 43 gelöscht 200.

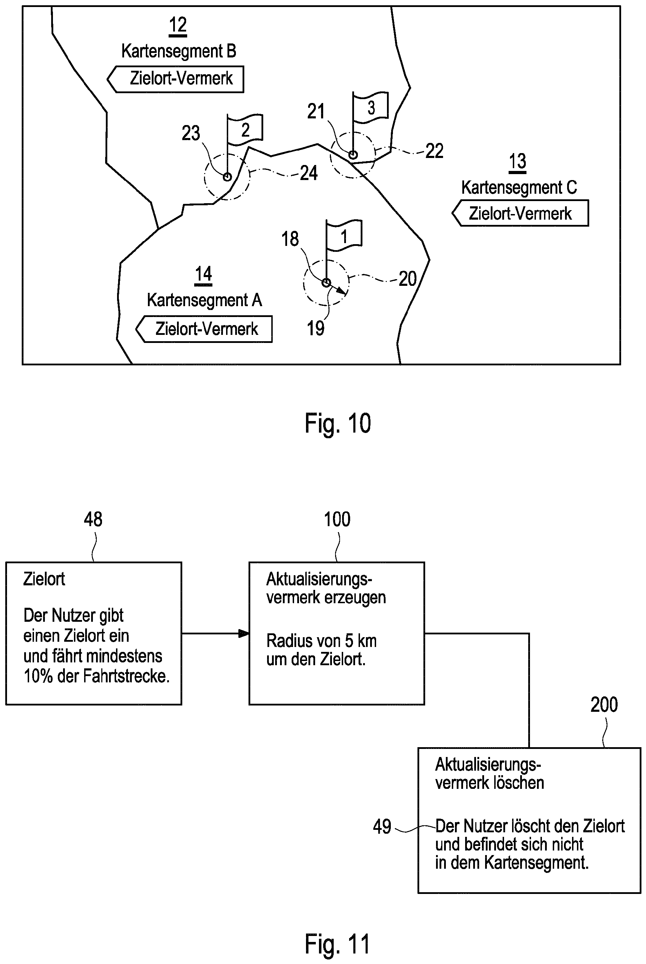

Figur 10 zeigt in einer vergrößerten Darstellung das in Figur 9 gezeigte Detail mit drei Zielorten. Das Detail umfasst drei Kartensegmente 12, 13, 14, drei zu jeweils einem Zielort korrespondierende Mittelpunkte 18, 21, 23, von denen die ersten beiden Mittelpunkte 18, 21 in dem Kartensegment 12 und der dritte Mittelpunkt 23 in dem Kartensegment 14 angeordnet sind. Jeder Mittelpunkt 18, 21, 23 definiert ein durch einen Zielortradius 19 von 5 km definiertes kreisförmiges Zielortgebiet 20, 22, 24 um den jeweiligen Mittelpunkt 18, 21, 23. Das kreisförmige Zielortgebiet 20 überlappt mit dem Kartensegment 14. Das kreisförmige Zielortgebiet 22 überlappt mit den Kartensegmenten 12, 13, 14. Das kreisförmige Zielortgebiet 24 überlappt mit den Kartensegmenten 12, 14.

Figur 11 zeigt in einem Ablaufdiagramm einen auf das in Figur 11 gezeigte Detail bezogenen Abschnitt einer Ausführungsform des erfindungsgemäßen Verfahrens. Wenn eine erste Zielortbedingung 48, dass der Nutzer 30 einen zu dem Mittelpunkt 18 korrespondierenden Zielort eingegeben hat und einen bestimmten Mindestanteil einer Fahrstrecke zu dem Zielort zurückgelegt hat, erfüllt ist, wird ein Aktualisierungsvermerk 41 mit dem dem Kartensegment 14 zugeordneten Segmentbezeichner 14 und dem Vermerktyp "Zielort" 44 erzeugt 100. Entsprechend werden zu dem Mittelpunkt 21 drei Aktualisierungsvermerke 41 jeweils mit einem der drei den Kartensegmenten 12, 13, 14 zugeordneten Segmentbezeichner 12, 13, 14 und dem Vermerktyp "Zielort" 44 und zu dem Mittelpunkt 23 zwei Aktualisierungsvermerke 41 jeweils mit einem der beiden den Kartensegmenten 12, 14 zugeordneten Segmentbezeichner 12, 14 und dem Vermerktyp "Zielort" 44 erzeugt 100.

Wenn eine zweite Zielortbedingung 49, dass der Nutzer 30 den eingegebenen zu dem Mittelpunkt 18 korrespondieren Zielort gelöscht hat und das Endgerät nicht in dem Kartensegment 14 angeordnet ist, wird der Aktualisierungsvermerk 41 mit dem dem Kartensegment 14 zugeordneten Kartenbezeichner 14 und Vermerktyp "Zielort" 44 gelöscht 200. Unter entsprechenden zweiten Zielortbedingungen 49 werden zu dem Mittelpunkt 21 die Aktualisierungsvermerke mit den Segmentbezeichnern 12, 13, 14 und dem Vermerktyp "Zielort" 44 und zu dem Mittelpunkt 23 die Aktualisierungsvermerke mit den Segmentbezeichnern 12, 14 und dem Vermerktyp "Zielort" 44 gelöscht 200.

Das erfindungsgemäße Verfahren bietet den Vorteil, dass die in einem Endgerät des Nutzers 30 installierten Kartensegmente 11, 12, 13, 14 der digitalen Navigationskarte 10 abhängig von dem Verhalten und dem Interesse des Nutzers 30 aktualisiert werden. Dadurch, dass für den Nutzer 30 uninteressante Kartensegmente 11, 12, 13, 14 nicht oder allenfalls sehr selten aktualisiert werden, ist das zum Aktualisieren der digitalen Navigationskarte 10 zu übertragende Datenvolumen verringert. Zudem können Aktualisierungspakete 41 auch über das Drahtlosnetzwerk 36, das Notebook 34 mit dem USB-Stick 35 sowie über das Smartphone 32 und das Tablet 33 des Nutzers 30 in das Steuergerät des Fahrzeugs 31 übertragen werden. Auf diese Weise wird das über ein Mobilfunknetz 37 zu übertragende Datenvolumen verringert, was mit einer entsprechenden Verringerung der mobilen Kommunikationskosten einhergeht. Abgesehen davon können Aktualisierungspakete 41 im Voraus oder mit einem bestimmten maximalen zeitlichen Verzug übertragen werden, um von dem Mobilfunknetz 37 verschiedene Übertragungswege zu nutzen.

### BEZUGSZEICHENLISTE:

- 10: digitale Navigationskarte
- 11: Kartensegment
- 12: Kartensegment
- 13: Kartensegment
- 14: Kartensegment
- 15: Mittelpunkt
- 16: Wohnortradius
- 17: Wohnortgebiet
- 18: Mittelpunkt
- 19: Zielortradius
- 20: Zielortgebiet
- 21: Mittelpunkt
- 22: Zielortgebiet
- 23: Mittelpunkt
- 24: Zielortgebiet
- 25: Aktualisierungspaket
- 26: Paketreferenz
- 27: Segementkennzeichner
- 30: Nutzer
- 31: Fahrzeug
- 32: mobiles Endgerät
- 33: mobiles Endgerät
- 34: stationäres Endgerät
- 35: mobiler Datenspeicher
- 36: lokales Drahtlosnetzwerk
- 37: Mobilfunknetz
- 38: stationäres Internet
- 39: Backendsystem
- 40: Vermerkliste
- 41: Aktualisierungsvermerk
- 42: Vermerktyp "Wohnort"
- 43: Vermerktyp "Arbeitsort"
- 44: Vermerktyp "Zielort"
- 45: erste Wohnortbedingung
- 46: erste Arbeitsortbedingung
- 47: zweite Wohnortbedingung/zweite Arbeitsortbedingung
- 48: erste Zielortbedingung
- 49: zweite Zielortbedingung
- 50: Prioritätenliste
- 51: Prioritätentabelle
- 52: Priorität
- 53: Priorisierungsgrund
- 54: Priorisierungskriterium
- 55: Prioritäteneintrag
- 60: Übertragungsliste
- 61: Übertragungseintrag
- 70: Versionsliste
- 71: Versionseintrag
- 72: Versionsnummer
- 100: Erzeugen eines Aktualisierungsvermerks
- 200: Löschen eines Aktualisierungsvermerks
- 300: Einsortieren in eine Prioritätenliste
- 400: Einsortieren in eine Übertragungsliste

## Patentansprüche

1. Verfahren zum Aktualisieren einer mehrere Kartensegmente (11, 12, 13, 14) umfassenden digitalen Navigationskarte (10), bei dem
- ein Backendsystem (39) mehrere jeweils einem Kartensegment (11, 12, 13, 14) der digitalen Navigationskarte (11, 12, 13, 14) zugeordnete Aktualisierungspakete (25) bereitstellt,
- ein Endgerät eines Nutzers (30) einen Aktualisierungsvermerk (41) mit einem einem Kartensegment (11, 12, 13, 14) zugeordneten Segmentkennzeichner (27) und einem bestimmten Vermerktyp (42, 43, 44, 45) erzeugt (100) und den erzeugten Aktualisierungsvermerk (41) an das Backendsystem (39) übermittelt, wobei der Aktualisierungsvermerk (41) einen konkreten auf das Kartensegment bezogenen Aktualisierungsbedarf des Endgeräts abbildet,
- das Backendsystem (39) den übermittelten Aktualisierungsvermerk (41) in eine dem Nutzer (30) zugeordnete Vermerkliste (40) einträgt, zu jedem von der Vermerkliste (40) umfassten Aktualisierungsvermerk (41) einen Prioritäteneintrag (55) mit dem Segmentkennzeichner (27) des Aktualisierungsvermerks (41) erzeugt und den erzeugten Prioritäteneintrag (55) entsprechend einer ihm mittels einer Prioritätentabelle (51) zugeordneten und von dem Vermerktyp (42, 43, 44, 45) des Aktualisierungsvermerks (41) abhängigen Priorität (52) in eine dem Nutzer (30) zugeordnete Prioritätenliste (50) einsortiert (300),
- das Backendsystem (39) zu jedem Prioritäteneintrag (55) der Prioritätenliste (50) anhand einer dem Endgerät zugeordneten Versionsliste (70) eine Paketreferenz (26) mit dem Segmentkennzeichner (27) des Prioritäteneintrags (55), einer Versionsnummer (72) eines den Segmentkennzeichner (27) umfassenden Versionseintrags (71) der Versionsliste (70) und einer Versionsnummer des bereitgestellten Aktualisierungspakets (41) erzeugt, einen die erzeugte Paketreferenz (26) umfassenden Übertragungseintrag (61) erzeugt und den erzeugten Übertragungseintrag (61) entsprechend der Position des Prioritäteneintrags (55) in der Prioritätenliste (50) in eine dem Endgerät und dem Nutzer (30) zugeordnete Übertragungsliste (60) einsortiert (400),
- das Endgerät automatisch jedes von einer Paketreferenz (26) eines Übertragungseintrags (61) der von dem Backendsystem (39) erzeugten und übermittelten Übertragungsliste (60) referenzierte bereitgestellte Aktualisierungspaket (25) von dem Backendsystem (39) entsprechend der Reihenfolge der Übertragungseinträge (61) in der Übertragungsliste (60) anfordert,
- das bereitgestellte Aktualisierungspaket (25) in das Endgerät des Nutzers (30) übertragen wird,
- das Endgerät das übertragene Aktualisierungspaket (25) installiert und eine Versionsnummer (72) des auf dem Endgerät installierten Aktualisierungspakets (25) an das Backendsystem (39) übermittelt, und das Backendsystem (39) einen Versionseintrag (71) mit der übermittelten Versionsnummer (72) und dem Segmentkennzeichner (27) des installierten Aktualisierungspakets (41) erzeugt und den erzeugten Versionseintrag (71) in die dem Endgerät zugeordnete Versionsliste (70) einträgt.

2. Verfahren nach Anspruch 1, bei dem das Backendsystem (39) einen in die Vermerkliste (40) eingetragenen Aktualisierungsvermerk (41) insbesondere durch Ändern des Vermerktyps (42, 43, 44, 45) verändert und/oder selbst einen Aktualisierungsvermerk (41) erzeugt und in die Vermerkliste (40) einträgt.

3. Verfahren nach einem der Ansprüche 1 oder 2, bei dem das Endgerät einen Aktualisierungsvermerk (41) mit dem Vermerktyp "Wohnort" (42) erzeugt, wenn das dem Kennzeichner zugeordnete Kartensegment (11, 12, 13, 14) mit einem Wohnortgebiet (17) überlappt, welches durch einen Mittelpunkt (15) und insbesondere kreisförmig durch einen bestimmten Wohnortradius (16) definiert ist, und für den Mittelpunkt (15) eine erste Wohnortbedingung (45) erfüllt ist, dass das Endgerät für einen bestimmten ersten Zeitraum täglich jeweils zwischen einer Nachtstunde und einer frühen Morgenstunde in dem Mittelpunkt (15) angeordnet ist, und bei dem ein den Vermerktyp "Wohnort" (42) umfassender Aktualisierungsvermerk (41) gelöscht wird (200), wenn für den Mittelpunkt (15) eine zweite Wohnortbedingung (47) erfüllt ist, dass das Endgerät für einen bestimmten zweiten Zeitraum täglich jeweils zwischen der Nachtstunde und der frühen Morgenstunde nicht in dem Mittelpunkt (15) angeordnet ist.

4. Verfahren nach einem der Ansprüche 1 bis 3, bei dem das Endgerät einen Aktualisierungsvermerk (41) mit dem Vermerktyp "Arbeitsort" (43) erzeugt, wenn das dem Kennzeichner zugeordnete Kartensegment (11, 12, 13, 14) mit einem Arbeitsortgebiet überlappt, welches durch einen Mittelpunkt und insbesondere kreisförmig durch einen bestimmten Arbeitsortradius definiert ist, und für den Mittelpunkt eine erste Arbeitsortbedingung (46) erfüllt ist, dass das Endgerät für einen bestimmten ersten Zeitraum täglich jeweils zwischen einer Vormittagsstunde und einer Nachmittagsstunde oder zwischen einer Mittagsstunde und einer Abendstunde in dem Mittelpunkt angeordnet ist, und bei dem ein den Vermerktyp "Arbeitsort" (43) umfassender Aktualisierungsvermerk (41) gelöscht wird (200), wenn für den Mittelpunkt eine zweite Arbeitsortbedingung (47) erfüllt ist, dass das Endgerät für einen bestimmten zweiten Zeitraum täglich jeweils zwischen der Vormittagsstunde und der Nachmittagsstunde oder zwischen der Mittagsstunde und der Abendstunde nicht in dem Mittelpunkt angeordnet ist.

5. Verfahren nach einem der Ansprüche 1 bis 4, bei dem das Endgerät einen Aktualisierungsvermerk (41) mit dem Vermerktyp "Zielort" (44) erzeugt, wenn das dem Kennzeichner zugeordnete Kartensegment (11, 12, 13, 14) mit einem Zielortgebiet überlappt, welches durch einen Mittelpunkt (18, 21, 23) und insbesondere kreisförmig durch einen bestimmten Zielortradius (19) definiert ist, und für den Mittelpunkt (18, 21, 23) eine erste Zielortbedingung (48) erfüllt ist, dass der Mittelpunkt (18, 21, 23) von dem Nutzer (30) als Zielort einer Fahrstrecke in das Endgerät eingegeben hat und einen bestimmten Mindestanteil der Fahrstrecke zurückgelegt hat, und bei dem ein den Vermerktyp "Zielort" (44) umfassender Aktualisierungsvermerk (41) gelöscht wird (200), wenn für den Mittelpunkt (18, 21, 23) eine zweite Zielortbedingung (49) erfüllt ist, dass der Mittelpunkt von dem Nutzer (30) als Zielort der Fahrstrecke in dem Endgerät gelöscht worden ist und das Endgerät nicht in dem zugeordneten Kartensegment (11, 12, 13, 14) angeordnet ist.

6. Verfahren nach einem der Ansprüche 1 bis 5, beim dem der Aktualisierungsvermerk (41) von einem Steuergerät eines Fahrzeugs (31) des Nutzers (30) oder einem mobilen Endgerät des Nutzers (30), insbesondere einem Smartphone (32) oder einem Tablet (33), oder einem stationären Endgerät des Nutzers (30), insbesondere einem Notebook (34), erzeugt und an das Backendsystem (39) übermittelt wird.

7. Verfahren nach Anspruch 6, bei dem ein bereitgestelltes Aktualisierungspaket (25) über ein Mobilfunknetz (37) in das Steuergerät des Fahrzeugs (31) und/oder über das Mobilfunknetz (37) in das Smartphone (32) und aus dem Smartphone (32) drahtlos in das Steuergerät des Fahrzeugs (31) und/oder über das Mobilfunknetz (37) in das Tablet (33) und aus dem Tablet (33) drahtlos in das Steuergerät des Fahrzeugs (31) übertragen wird und/oder bei dem ein bereitgestelltes Aktualisierungspaket (25) über ein stationäres Internet (38) in ein lokales Drahtlosnetzwerk (36) des Nutzers (30) und aus dem lokalen Drahtlosnetzwerk (36) in das Steuergerät des Fahrzeugs (31) und/oder über das stationäre Internet (38) in das Notebook (34) und von dem Notebook (34) mittels eines mobilen Datenspeichers des Nutzers (30), insbesondere mittels eines USB-Sticks (35), in das Steuergerät des Fahrzeugs (31) übertragen wird.

8. Verfahren nach einem der Ansprüche 1 bis 7, bei dem das Aktualisierungspaket (25) als ein vollständiges Aktualisierungspaket (25) und als ein inkrementelles Aktualisierungspaket (25) bereitgestellt wird und bei dem der Übertragungseintrag (61) mit einer das vollständige Aktualisierungspaket (25) referenzierenden Paketreferenz (26) erzeugt wird, wenn eine positive Versionsdifferenz zwischen einer Versionsnummer (72) des bereitgestellten Aktualisierungspakets (25) und einer Versionsnummer (72) eines zu dem bereitgestellten Aktualisierungspaket (25) korrespondierenden in dem Endgerät installierten Aktualisierungspakets (25) größer als ein bestimmter Differenzwert ist, oder mit einer das inkrementelle Aktualisierungspaket (25) referenzierenden Paketreferenz (26) erzeugt wird, wenn die Versionsdifferenz höchstens gleich dem bestimmten Differenzwert ist.

## Claims

1. Method for updating a digital navigation map (10) comprising a plurality of map segments (11, 12, 13, 14), wherein:
- a backend system (39) provides a plurality of update packets (25) each associated with a map segment (11, 12, 13, 14) of the digital navigation map (11, 12, 13, 14),
- a terminal device of a user (30) generates (100) an update note (41) with a segment identifier (27) associated with a map segment (11, 12, 13, 14), and a specific note type (42, 43, 44, 45), and transmits the generated update note (41) to the backend system (39), wherein the update note (41) represents a concrete update need of the terminal device concerning the map segment,
- the backend system (39) enters the transmitted update note (41) into a note list (40) associated with the user (30), generates a priority entry (55) with the segment identifier (27) of the update note (41) for each update note (41) comprised by the note list (40) and sorts (300) the generated priority entry (55) into a priority list (50) associated with the user (30) according to a priority (52) associated with said priority entry (55) by means of a priority table (51), said priority (52) being dependent on the note type (42, 43, 44, 45) of the update note (41),
- the backend system (39) generates a packet reference (26) for each priority entry (55) of the priority list (50) based on a version list (70) associated with the terminal device, said packet reference (26) having the segment identifier (27) of the priority entry (55), a version number (72) of a version entry (71) of the version list (70), said version entry (71) comprising the segment identifier (27), and having a version number of the provided update packet (41), generates a transfer entry (61) comprising the generated packet reference (26) and sorts (400) the generated transfer entry (61) into a transfer list (60) according to the position of the priority entry (55) in the priority list (50), said transfer list (60) being associated with the terminal device and the user (30),
- the terminal device automatically requests, from the backend system (39), each provided update packet (25) which is referenced by a packet reference (26) of the transfer entry (61) of the transfer list (60) generated and transmitted by the backend system (39), according to the order of the transfer entries (61) in the transfer list (60),
- the provided update packet (25) is transmitted into the terminal device of the user (30),
- the terminal device installs the transmitted update packet (25) and transmits a version number (72) of the update packet (25) installed on the terminal device to the backend system (39), and the backend system (39) generates a version entry (71) with the transmitted version number (72) and the segment identifier (27) of the installed update packet (41) and enters the generated version entry (71) into the version list (70) associated with the terminal device,

2. Method according to claim 1, wherein the backend system (39) changes an update note (41) entered into the note list (40) particularly by changing the note type (42, 43, 44, 45) and/or autonomously generates an update note (41) and enters it into the note list (40).

3. Method according to any of claims 1 or 2, wherein the terminal device generates an update note (41) with the "place-of-residence" note type (42) when the map segment (11, 12, 13, 14) associated with the identifier overlaps with a place-of-residence area (17) that is defined by a centre point (15) and particularly circular by a specific place-of-residence radius (16) and when the centre point (15) fulfils a first place-of-residence condition (45) that the terminal device is arranged in the centre point (15) for a specific first period daily between a night hour and an early morning hour, and wherein an update note (41) comprising the "place-of-residence" note type (42) is deleted (200) when the centre point (15) fulfils a second place-of-residence condition (47) that the terminal device is not arranged in the centre point (15) for a specific second period daily between the night hour and the early morning hour.

4. Method according to any of claims 1 to 3, wherein the terminal device generates an update note (41) with the "place-of-work" note type (43) when the map segment (11, 12, 13, 14) associated with the identifier overlaps with a place-of-work area that is defined by a centre point and particularly circular by a specific place-of-work radius and when the centre point fulfils a first place-of-work condition (46) that the terminal device is arranged in the centre point for a specific first period daily between a morning hour and an afternoon hour or between a midday hour and an evening hour, and wherein an update note (41) comprising the "place-of-work" note type (43) is deleted (200) when the centre point fulfils a second place-of-work condition (47) that the terminal device is not arranged in the centre point for a specific second period daily between the morning hour and the afternoon hour or between the midday hour and the evening hour.

5. Method according to any of claims 1 to 4, wherein the terminal device generates an update note (41) with the "place-of-destination" note type (44) when the map segment (11, 12, 13, 14) associated with the identifier overlaps with a place-of-destination area that is defined by a centre point (18, 21, 23) and particularly circular by a specific place-of-destination radius (19) and when the centre point (18, 21, 23) fulfils a first place-of-destination condition (48) that the user (30) has input the centre point (18, 21, 23) as the place-of-destination of a route into the terminal device and has travelled a specific minimum portion of the route, and wherein an update note (41) comprising the "place-of-destination" note type (44) is deleted (200) when the centre point (18, 21, 23) fulfils a second place-of-destination condition (49) that the centre point has been deleted by the user (30) as the place-of-destination of the route in the terminal device and the terminal device is not arranged in the associated map segment (11, 12, 13, 14).

6. Method according to any of claims 1 to 5, wherein the update note (41) is generated and transmitted to the backend system (39) from a control device of a vehicle (31) of the user (30) or from a mobile terminal device of the user (30), in particular a smartphone (32) or a tablet (33), or a stationary terminal device of the user (30), in particular a notebook (34).

7. Method according to claim 6, wherein a provided update packet (25) is transmitted wirelessly via a mobile radio network (37) into the control device of the vehicle (31) and/or via the mobile radio network (37) into the smartphone (32) and from the smartphone (32) into the control device of the vehicle (31) and/or wirelessly via the mobile radio network (37) into the tablet (33) and from the tablet (33) into the control device of the vehicle (31) and/or wherein a provided update packet (25) is transmitted via a stationary Internet (38) into a local wireless network (36) of the user (30) and from the local wireless network (36) into the control device of the vehicle (31) and/or via the stationary Internet (38) into the notebook (34) and from the notebook (34) into the control device of the vehicle (31) by means of a mobile data storage of the user (30), in particular by means of a USB stick (35).

8. Method according to any of claims 1 to 7, wherein the update packet (25) is provided as a complete update packet (25) and as an incremental update packet (25) and wherein the transfer entry (61) is generated with a packet reference (26) that references the complete update packet (25) when a positive version difference between a version number (72) of the provided update packet (25) and a version number (72) of an update packet (25) corresponding to the provided update packet (25) and installed in the terminal device is greater than a specific difference value, or is generated with a packet reference (26) that references the incremental update packet (25) when the version difference is at most equal to the specific difference value.

## Revendications

1. Procédé d'actualisation d'une carte de navigation numérique (10) comprenant plusieurs segments de carte (11, 12, 13, 14), dans lequel
- un système principal (39) fournit plusieurs paquets d'actualisation (25) associés respectivement à un segment de carte (11, 12, 13, 14) de la carte de navigation numérique (11, 12, 13, 14),
- un terminal d'un utilisateur (30) génère (100) une note d'actualisation (41) avec un identifiant de segment (27) associé à un segment de carte (11, 12, 13, 14) et un type de note déterminé (42, 43, 44, 45) et transmet la note d'actualisation (41) générée au système principal (39), dans lequel le paquet d'actualisation représente un besoin d'actualisation spécifique du terminal concernant le segment de carte,
- le système principal (39) entre la note d'actualisation (41) transmise dans une liste de notes (40) associée à l'utilisateur (30), génère une entrée de priorité (55) avec l'identifiant de segment (27) de la note d'actualisation (41) pour chaque note d'actualisation (41) incluse dans la liste de notes (40), et range (300) une priorité (52), correspondant à l'entrée de priorité générée (55), qui lui est attribuée au moyen d'une table de priorités (51) et en fonction du type de note (42, 43, 44, 45) de la note d'actualisation (41) dans une liste de priorités (50) associée à l'utilisateur (30),
- le système principal (39), pour chaque entrée de priorité (55) de la liste de priorité (50) basée sur une liste de versions (70) associée au terminal, génère une référence de paquet (26) avec l'identifiant de segment (27) de l'entrée de priorité (55), le numéro de version (72) de l'entrée de version (71) de la liste de versions (70) comprenant l'identifiant de segment (27) et un numéro de version du note d'actualisation (41) fourni, génère une entrée de transmission (61) comprenant la référence de paquet générée (26), et range (400) l'entrée de transmission générée (61), en fonction de la position de l'entrée de priorité (55) dans la liste de priorités (50), dans une liste de transmission (60) associée au terminal et à l'utilisateur (30),
- le terminal demande automatiquement chaque paquet d'actualisation (25) du système principal (39) référencé par une référence de paquet (26) d'une entrée de transmission (61) de la liste de transmissions (60) générée et transmise par le système principal (39) selon la séquence des entrées de transmission (61) dans la liste de transmission (60),
- le paquet d'actualisation (25) fourni est transféré vers le terminal de l'utilisateur (30),
- le terminal installe le paquet d'actualisation (25) transmis et transmet un numéro de version (72) d'un paquet d'actualisation (25) installé sur le terminal au système principal (39), et le système principal (39) génère une entrée de version (71) avec le numéro de version transmis (72) et l'identifiant de segment (27) du paquet d'actualisation (25) installé, et entre l'entrée de version générée (71) dans la liste de versions (70) associée au terminal.

2. Procédé selon la revendication 1, dans lequel le système principal (39) modifie une note d'actualisation (41) entrée dans la liste de notes (40), notamment en modifiant le type de note (42, 43, 44, 45), et/ou génère lui-même un note d'actualisation (41) et l'entre dans la liste de notes (40).

3. Procédé selon l'une quelconque des revendications 1 ou 2, dans lequel le terminal génère une note d'actualisation (41) avec le type de note « lieu de résidence » (42) lorsque le segment de carte (11, 12, 13, 14) associé à l'identifiant chevauche une zone de lieu de résidence (17), qui est définie par un point central (15) et en particulier circulaire par un rayon de lieu de résidence déterminé (16), et une première condition de lieu de résidence (45) est remplie pour le point central (15), en ce sens que le terminal est prévu quotidiennement pour une première période de temps entre une heure de nuit et une heure tôt le matin dans le point central (15), et dans lequel une note d'actualisation (41) comprenant le type de note « lieu de résidence » (42) est supprimée (200) lorsque une seconde condition de lieu de résidence (47) est satisfaite pour le point central, en ce sens que le terminal n'est pas prévu dans le point central (15) pendant une seconde période de temps déterminée entre l'heure de nuit et l'heure tôt le matin.

4. Procédé selon l'une quelconque des revendications 1 à 3, dans lequel le terminal génère une note d'actualisation (41) avec le type de note « lieu de travail » (43) lorsque le segment de carte (11, 12, 13, 14) associé à l'identifiant chevauche une zone de lieu de travail, qui est définie par un point central et en particulier circulaire par un rayon de lieu de travail déterminé, et une première condition de lieu de travail (46) est satisfaite pour le point central, en ce sens que le terminal est prévu dans le point central pour une première période de temps déterminée quotidiennement entre une heure de matin et une heure d'après-midi ou entre une heure de midi et une heure de soir, et dans lequel une note d'actualisation (41) comprenant le type de note « lieu de travail » (43) est supprimée (200) lorsque une seconde condition de lieu de travail (47) est satisfaite pour le point central, en ce sens que le terminal n'est pas prévu dans le point central pour une seconde période de temps déterminée, entre l'heure de matin et l'heure d'après-midi ou entre l'heure de midi et l'heure de soir.

5. Procédé selon l'une quelconque des revendications 1 à 4, dans lequel le terminal génère un note d'actualisation (41) avec le type de note « destination » (44) si le segment de carte (11, 12, 13, 14) associé à l'identifiant chevauche une zone de destination, qui est définie par un point central (18, 21, 23) et en particulier circulairement par un rayon de destination déterminé (19), et une première condition de destination (48) est satisfaite pour le point central (18, 21, 23), en ce sens que le point central (18, 21, 23) a été entré dans le terminal par l'utilisateur (30) comme destination d'un itinéraire et a défini une portion minimale déterminée de l'itinéraire, et dans lequel un note d'actualisation (41) comprenant le type de note «destination» (44) est supprimée (200), lorsque une seconde condition de destination (49) est satisfaite pour le point central (18, 21, 23), en ce sens que le point central a été supprimé par l'utilisateur (30) comme destination de l'itinéraire dans le terminal et que le terminal n'est pas arrangé dans le segment de carte associé (11, 12, 13, 14).

6. Procédé selon l'une quelconque des revendications 1 à 5, dans lequel la note d'actualisation (41) est transmis au système principal (39) d'un dispositif de commande d'un véhicule (31) de l'utilisateur (30) ou d'un dispositif mobile de l'utilisateur (30), notamment un smartphone (32) ou une tablette (33), ou d'un terminal fixe de l'utilisateur (30), en particulier un notebook (34),.

7. Procédé selon la revendication 6, dans lequel un paquet d'actualisation (25) fourni est transmis via un réseau de téléphonie mobile (37) au dispositif de commande du véhicule (31) et/ou via le réseau de téléphonie mobile (37) dans le smartphone (32) et du smartphone (32) sans fil au dispositif de commande du véhicule (31) et/ou via le réseau de téléphonie mobile (37) dans la tablette (33) et de la tablette (33) sans fil au dispositif de commande du véhicule (31) et/ou dans lequel un paquet d'actualisation (25) est transmis au dispositif de commande du véhicule (31) via un Internet fixe (38) dans un réseau sans fil local (36) de l'utilisateur (30) et du réseau sans fil local (36) dans le dispositif de commande du véhicule (31) et/ou via l'Internet fixe (38) dans le notebook (34) et du notebook (34) au moyen d'une mémoire de données mobile de l'utilisateur (30), notamment au moyen d'une clé USB (35).

8. Procédé selon l'une quelconque des revendications 1 à 7, dans lequel le paquet d'actualisation (25) est fourni sous la forme d'un paquet d'actualisation complet (25) et sous la forme d'un paquet d'actualisation incrémentielle (25) et dans lequel l'entrée de transmission (61) est générée avec une référence de paquet de référence (26) faisant référence à un paquet d'actualisation complet (25) lorsque une différence de version positive entre un numéro de version (72) du paquet d'actualisation fourni (25) et un numéro de version (72) d'un paquet d'actualisation (25) installé dans le terminal correspondant au paquet d'actualisation (25) fourni est supérieure à est une valeur de différence déterminée, ou est générée avec une référence de paquet (26) faisant référence au paquet d'actualisation incrémentielle (25) lorsque la différence de version est au plus égale à la valeur de différence déterminée.
